Europäisches Patentamt

European Patent Office

Office européen des brevets

(19)

(11) Numéro de publication: **0 274 777**
**B1**

(12) # FASCICULE DE BREVET EUROPEEN

(45) Date de publication du fascicule du brevet:
27.06.90

(51) Int. Cl.⁵: **B64C 33/02**

(21) Numéro de dépôt: **87202414.6**

(22) Date de dépôt: **04.12.87**

(54) **Aile profilée à déformation commandée et applications en particulier aux aéronefs à ailes battantes.**

(30) Priorité: **07.01.87 FR 8700203**

(43) Date de publication de la demande:
**20.07.88 Bulletin 88/29**

(45) Mention de la délivrance du brevet:
**27.06.90 Bulletin 90/26**

(84) Etats contractants désignés:
**DE FR GB IT**

(56) Documents cités:
**FR-A- 410 855**
**FR-A- 678 138**
**FR-A- 968 710**
**FR-A- 1 317 417**
**US-A- 4 003 676**

(73) Titulaire: **Riout, Roland, 12 rue du Vignemale,
F-31240 L'Union(FR)**

(72) Inventeur: **Riout, Roland, 12 rue du Vignemale,
F-31240 L'Union(FR)**

(74) Mandataire: **Barre, Philippe, Cabinet
Barre-Gatti-Laforgue 95 rue des Amidonniers,
F-31069 Toulouse Cédex(FR)**

ACTORUM AG

## Description

L'invention concerne une aile profilée à déformation variable commandée le long de son profil. Par "aile profilée", on entend d'une façon générale tout élément profilé destiné à être disposé avec une vitesse relative dans un fluide en vue de développer des forces de sustentation et/ou de propulsion, ou d'en recueillir de l'énergie ou de lui en fournir ; ce terme s'étend aussi bien aux voilures ou pales d'aéronefs (avions, hélicoptères...), qu'aux pales d'éolienne, hélices aériennes ou marines, etc... L'invention vise tout particulièrement mais non exclusivement une application de ladite aile profilée pour constituer un aéronef à ailes battantes.

Les ailes d'avion ont une incidence généralement non réglable le long de leur profil, cependant que les pales d'hélicoptères ou de certaines hélices possèdent un pas variable dont les variations peuvent être commandées mais demeurent identiques le long de tout le profil de pale (pas variant d'un même angle sur toute l'envergure). Comme cela est bien connu, il n'est pas possible dans ces conditions, de bénéficier d'un rendement aérodynamique optimum le long de tout le profil pour des régimes très différents et le calcul des profils est effectué pour viser le compromis le plus satisfaisant dans chaque application. Cette insuffisance est en particulier un inconvénient grave pour les avions à ailes battantes dont les ailes passent au cours d'un cycle par des régimes aérodynamiques très différents. Le principe de ces avions est maintenant bien connu mais ceux-ci n'ont pas fait l'objet de réalisation concrète notamment en raison de ce type de problème.

Par ailleurs, les brevets FR n° 1.368.710 et 1.430.071 proposent une hélice à pas globalement variable qui, en fin de réglage d'incidence, peut subir des corrections de faibles amplitudes différentes selon les sections du profil afin de réduire l'incidence des sections du profil proches du moyeu. Cette hélice est divisée sur sa longueur en plusieurs secteurs, chacun monté avec un certain jeu entre deux surfaces de butée: les corrections sont effectuées en tout ou rien au niveau de chaque secteur au moyen d'un fluide qui exerce sur le secteur considéré une pression l'amenant, en fin de réglage d'incidence, à revenir vers l'arrière sur une petite course contre la surface de butée correspondante. Toutefois, le principe même de cette hélice limite les corrections possibles à de très faibles amplitudes et ne permet pas d'obtenir, à des régimes très différents, une incidence sur tout le profil proche de l'incidence optimum. Par exemple, pour des avions à ailes battantes, il ne serait pas possible avec ce principe de régler de façon continue et progressive la position angulaire des divers secteurs d'aile en fonction de la position de l'aile dans le cycle de battement.

La présente invention se propose de fournir une aile profilée améliorée, permettant un réglage d'incidence, continu et progressif, variable le long du profil d'aile (le terme "aile profilée" étant entendu dans le sens général sus-évoqué).

Par convention, on qualifiera de "longitudinale" la direction parallèle aux bord d'attaque ou bord de fuite de l'aile, de "transversale" la direction perpendiculaire s'étendant selon la corde du profil et de "frontale" la direction orthogonale aux deux premières s'étendant selon l'épaisseur du profil.

L'aile profilée visée par l'invention comprend un longeron axial, une pluralité de secteurs d'aile juxtaposés le long de l'aile, et habillés en surface d'un revêtement déformable, chacun des secteurs d'aile étant articulé sur le longeron pour pouvoir pivoter autour de celui-ci, et des moyens de positionnement angulaire desdits secteurs autour du longeron; selon la présente invention, les moyens de positionnement angulaire des secteurs comprennent, d'une part, une série de guignols, chacun associé à un secteur de façon à fixer la position angulaire dudit secteur autour du longeron, d'autre part, un dispositif de commande desdits guignols apte à engendrer leur pivotement en vue de conférer à chacun de ceux-ci une position déterminée en fonction des incidences souhaitées pour chaque secteur d'aile, chaque guignol associé à un secteur d'aile donné étant porté par le secteur précédent et articulé sur celui-ci par un axe transversal. Chaque guignol comprend une première branche liée au dispositif de commande en vue de commander la rotation dudit guignol par rapport au secteur précédent, et une seconde branche articulée sur le secteur d'aile considéré pour conférer audit secteur une position angulaire déterminée autour du longeron, en vue d'assigner ainsi aux différents secteurs d'aile des incidences variables par modifications progressives.

Ainsi, l'aile conforme à l'invention possède un pas variable se caractérisant en ce que, au cours des variations, le profil change d'incidence d'un angle différent pour les divers secteurs entre l'emplanture et le bout d'aile. Les variations d'angle des secteurs s'ajoutent depuis l'emplanture jusqu'au bout d'aile de sorte qu'il est possible d'atteindre des différences d'incidence importantes entre emplanture et bout d'aile au moyen de guignols identiques, de petites tailles.

Chaque secteur d'aile peut être formé par une ou plusieurs nervures disposées dans un plan transversal et par une structure rigide telle que caisson, berceau, structure triangulée. La ou lesdites nervures peuvent être solidaires de la structure rigide pour former un ensemble d'un seul tenant articulé autour du longeron; dans le cas du premier mode de réalisation évoqué plus haut, il est également possible, comme on le verra plus loin, d'articuler de façon indépendante la structure rigide et la nervure de chaque secteur, en vue d'autoriser un ajustement d'incidence indépendant de chaque secteur.

Par ailleurs, chaque secteur est habillé en surface d'un revêtement déformable qui peut être en appui sur deux nervures; en particulier, ce revêtement comprend, au niveau de chaque secteur, un profil d'extrados et un profil d'intrados, aptes à subir un vrillage et agencés contre les nervures de façon à pouvoir glisser indépendamment l'un de l'autre lorsque ces nervures prennent des incidences différentes. Malgré les différences d'incidences le long du profil, on assure ainsi un continuité de la surface de celui-ci.

Dans le cas où l'aile est amenée à posséder un mouvement cyclique (par exemple pour un avion à ailes battantes où chaque cycle correspond à un battement), le dispositif de commande des guignols est associé à des moyens d'actionnement cyclique, situés à l'emplanture de l'aile et adaptés pour actionner de façon répétitive ledit dispositif de commande au cours des cycles de fonctionnement. Ces moyens peuvent comprendre un système à came ou un robot programmé, permettant l'ajustement de l'incidence de chaque secteur en fonction de la position de l'aile dans le cycle de fonctionnement.

Par ailleurs, la structure de l'aile conforme à l'invention se prête à un changement commandé global de l'incidence générale de celle-ci (par exemple pour permettre le pilotage d'un avion à ailes battantes). Il suffit de monter le premier guignol près de l'emplanture de façon que celui-ci soit mobile le long de la direction frontale (dans le sens de l'épaisseur du profil) et de prévoir des moyens de manœuvre permettant de faire varier la position de ce premier guignol.

L'invention s'applique à tout élément aérodynamiqu profilé: hélice aérienne ou marine, pale d'éolienne, pale d'aéronef, voilure d'aéronef. Elle est tout particulièrement adaptée pour la réalisation d'un aéronef à ailes battantes comprenant un fuselage et au moins deux ailes profilées conformes à l'invention. Ces ailes sont articulées sur le fuselage et associées à des moyens d'entraînement (hydrauliques, mécaniques...) aptes à les mouvoir selon des cycles de battement. Chaque aile profilée comporte des moyens d'actionnement cyclique adaptés pour conférer aux secteurs de ladite aile une incidence variant de façon cyclique en fonction de la position de l'aile dans le cycle de battement.

L'invention ayant été exposée dans sa forme générale, la description qui suit en référence aux dessins annexés en présente à titre d'exemples non limitatifs plusieurs modes de réalisation et une application aux avions à ailes battantes ; sur ces dessins qui font partie intégrante de la présente description:

- la figure 1 est une vue partielle en plan d'une aile profilée conforme à un premier mode de réalisation,
- la figure 2 en est une vue partielle en perspective avec éclaté et arraché partiel des profilés de revêtement, les secteurs étant représentés en position neutre d'égale incidence,
- la figure 3 est une coupe de détail montrant la jonction des profils de revêtement contre une nervure,
- la figure 4 est un schéma illustrant les incidences différentes de plusieurs secteurs pour une configuration de l'aile,
- la figure 5 schématise une variante d'un secteur d'aile, vu à partir du bord de fuite (revêtement supposé enlevé),
- la figure 6 représente un détail de la figure 5 à échelle plus grande,
- la figure 7 est une vue partielle en plan de ladite variante (revêtement supposé enlevé),
- la figure 8 représente un détail de la figure 7 à échelle plus grande,
- la figure 9 est une vue en perspective schématique d'un autre mode de réalisation,

- les figures 10 et 11 illustrent une application possible de l'invention,
- les figures 12 et 13 illustrent en vue de face et vue en plan un avion à ailes battantes réalisé conformément à l'invention,
- la figure 14 est une vue schématique en plan montrant le montage des ailes,
- la figure 15 schématise des moyens hydrauliques d'entraînement des ailes dans leur cycle de battement,
- la figure 16 est une vue schématique montrant un mode de réalisation des moyens d'actionnement des ailes, destinés à ajuster l'incidence des secteurs en fonction de la position de l'aile dans le cycle de battement,
- la figure 17 est une vue schématique d'un autre mode de réalisation de ces moyens d'actionnement,
- la figure 18 est une vue schématique montrant des moyens de manoeuvre permettant de changer globalement l'incidence générales de l'aile.

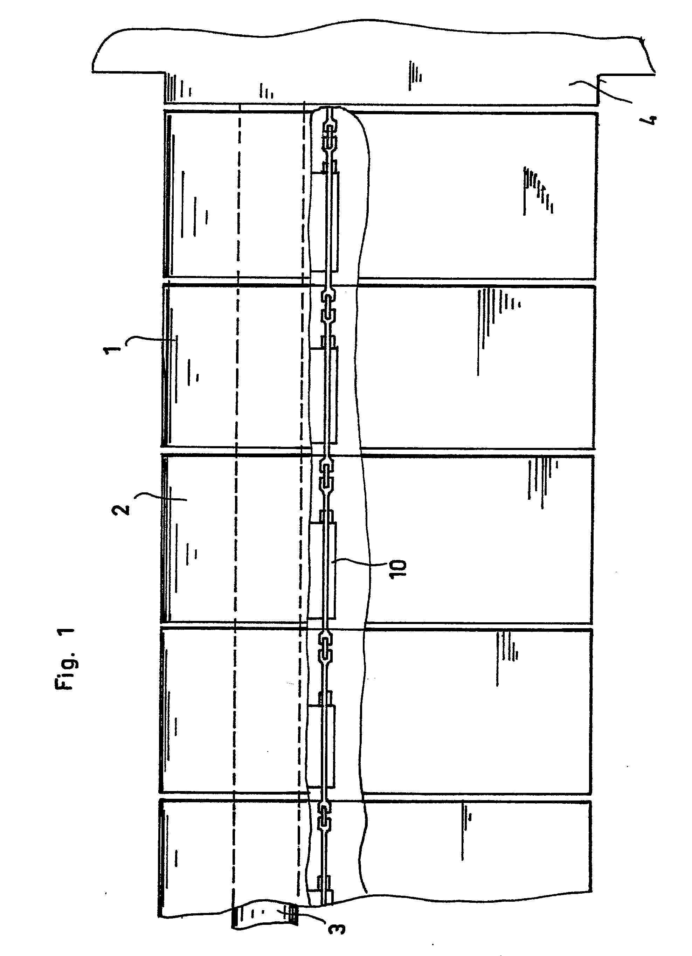

L'aile profilée représentée à titre d'exemple aux figures 1, 2 et 3 comprend une pluralité de secteurs tels que 1, 2 placés côte à côte et articulés le long d'un longeron 3 qui, en l'exemple, est constitué par une membrure tubulaire s'étendant le long de la direction longitudinale de l'aile.

D'un côté, ce longeron est solidaire d'un caisson d'encastrement fixe 4 qui est assujetti sur un élément porteur, selon l'application : fuselage, moyeu, noix centrale de rotor... De l'autre côté du longeron, un organe élastique peut être prévu pour maintenir les caissons en position juxtaposée.

De plus, comme on le verra plus loin, des galets peuvent le cas échéant être prévus entre caissons pour faciliter leurs rotations relatives. Les caissons peuvent également être clavetés longitudinalement le long du longeron de façon à pouvoir pivoter autour de celui-ci sans glissement longitudinal.

Chaque secteur est composé d'une structure rigide, en l'exemple un berceau 5, en bordure duquel est assujettie une nervure transversale 6 dont la section correspond au profil souhaité de l'aile à son niveau.

Chaque secteur est doté d'un guignol 7 qui est porté par le secteur précédent (nervure ou structure rigide) en vue d'assigner au secteur considéré une incidence réglable, le cas échéant différente de celle des autres secteurs. En l'exemple chaque guignol 7 est articulé par un axe transversal sur une chape 8 solidarisée à la nervure du secteur précédent et comprend deux branches : une première branche 7a de direction générale frontale qui est liée à un dispositif de commande, et une second branche 7b de direction longitudinale qui est articulée par l'entremise d'une biellette 9 et d'axes transversaux sur le berceau du secteur considéré. Le premier guignol (près de l'emplanture) est porté par le caisson fixe 4.

Le dispositif de commande comprend des bielles de commande telles que 10 qui sont articulées autour d'axes transversaux sur les premières branches 7a des guignols de façon à les relier deux à deux.

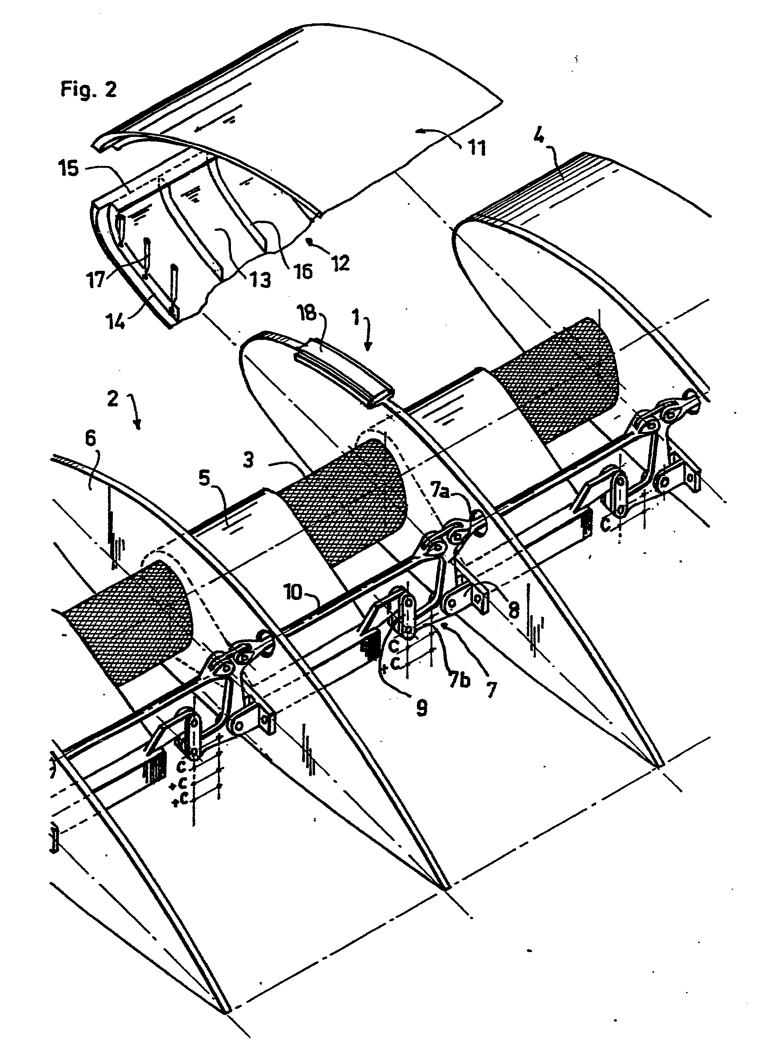

La bielle d'emplanture peut être actionnée par tout moyen en fonction de l'application en vue d'assigner aux différents secteurs des incidences variables. A la figure 2, on a schématisé la position neutre où tous les secteurs ont une même incidence. A partir de cette position une action sur la bielle d'emplanture modifie les incidences des secteurs progressivement depuis l'emplanture jusqu'au bout d'aile, le décalage angulaire -c- s'additionnant d'un secteur à l'autre. Bien entendu, une loi différente de modification de l'incidence le long du profil peut, le cas échéant, être prévu en modifiant les longueurs des branches 7a, 7b de guignols, ou des biellettes 9 ou par l'adjonction de cames comme on le décrira en variante plus loin.

Par ailleurs, chaque secteur est habillé en surface qu'un revêtement déformable en appui sur deux nervures : la nervure 6 du secteur considéré et la nervure du secteur voisin.

Ce revêtement comprend au niveau de chaque secteur un profil d'extrados 11 et un profil d'intrados 12. Chacun de ces profils est constitué par une nappe souple d'habillage 13 portée par des raidisseurs de sorte que l'ensemble soit apte à subir un vrillage.

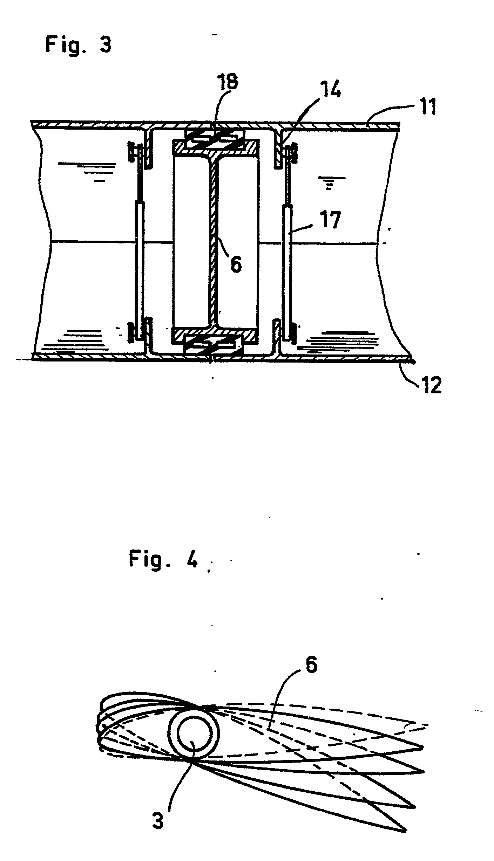

En l'exemple représenté aux figures 2 et 3, deux radisseurs tels que 14 sont prévus latéralement sur les bords de chaque profil d'extrados ou d'intrados en vue de chevaucher les nervures 6 ; deux raidisseurs tels que 15 sont situés le long des bord d'attaque et bord de fuite en vue de former des plages de glissement des profils d'extrados et d'intrados l'un par rapport à l'autre ; et plusieurs raidisseurs intermédiaires tels que 16 sont situés dans des plans transversaux.

Le profil de l'aile est maintenu fermé au moyen d'organes de liaison tels que 17 qui relient les profils d'extrados et d'intrados de façon à les maintenir appliqués contre les nervures, tout en autorisant leur glissement relatif. En l'exemple, ces organes de liaison sont constitués par de petites biellettes 17 articulées sur les raidisseurs latéraux des profils d'extrados et d'intrados. Il est également possible de prévoir des moyens élastiques tels que ressorts ou autres.

Lorsque les incidence des secteurs changent, les profils d'extrados et d'intrados guidés par les nervures se vrillent et glissent l'un par rapport à l'autre, de sorte qu'est ainsi assurée une continuité du profil au niveau des nappes d'habillage. Pour accroître la souplesse de déformation lors du gauchissement du profil, les profils d'extrados et d'intrados sont de préférence disposés en appui contre les nervures 6 avec interposition d'une bande élastique 18 comme le montre la figure 3.

La figure 4 illustre les incidences croissante depuis l'emplanture jusqu'au bout d'aile que peuvent prendre les divers secteurs lorsque les bielles de commande sont actionnées (à cette figure, seules les nervures des secteurs ont été représentées pour la rendre plus claire).

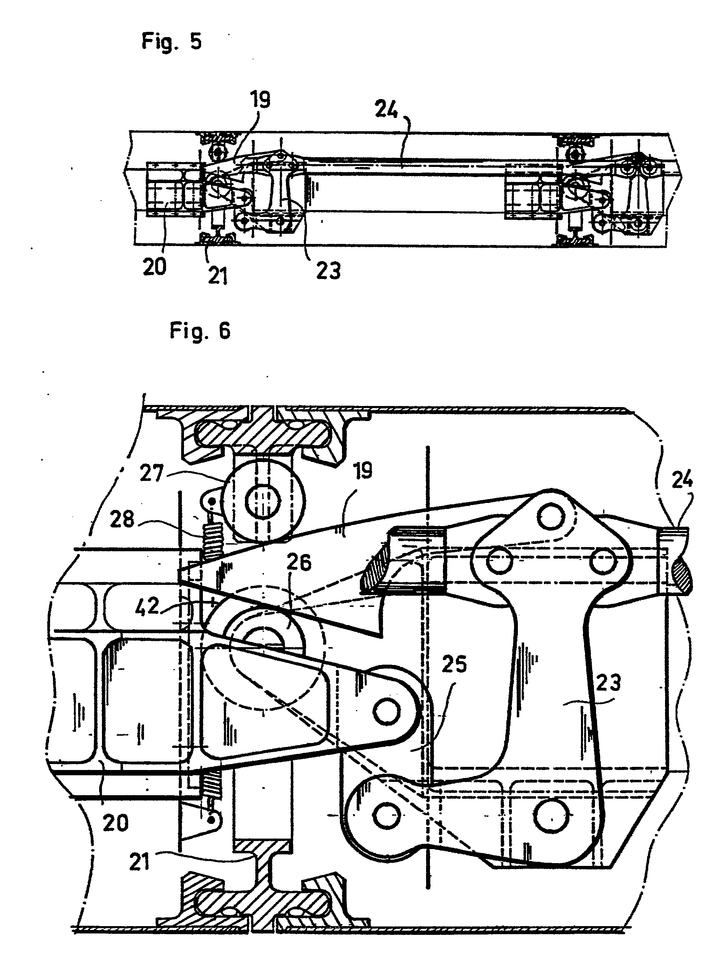

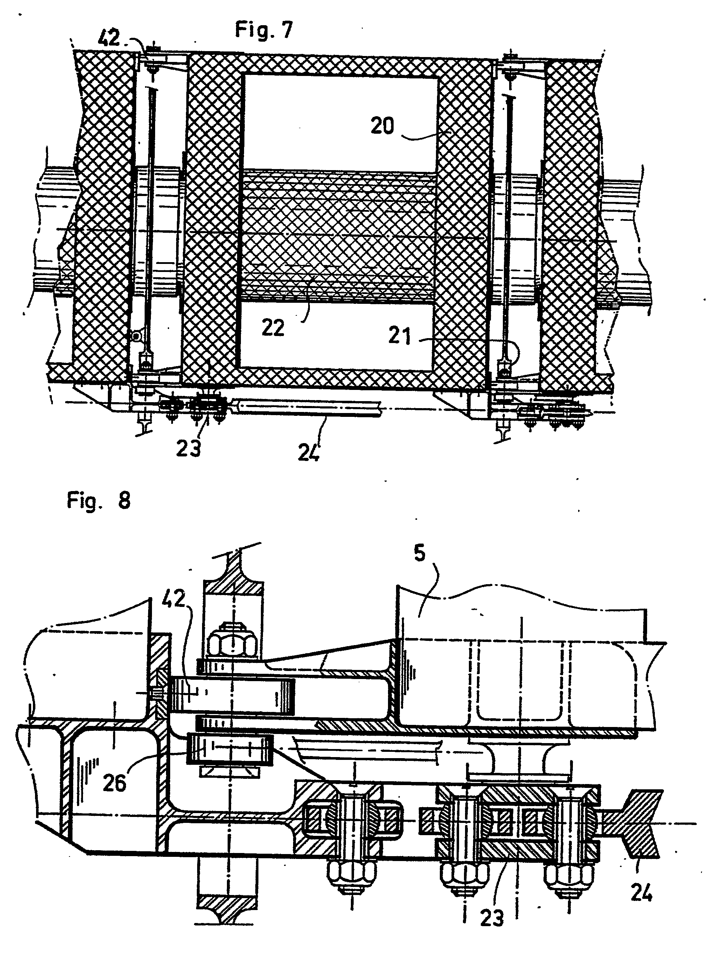

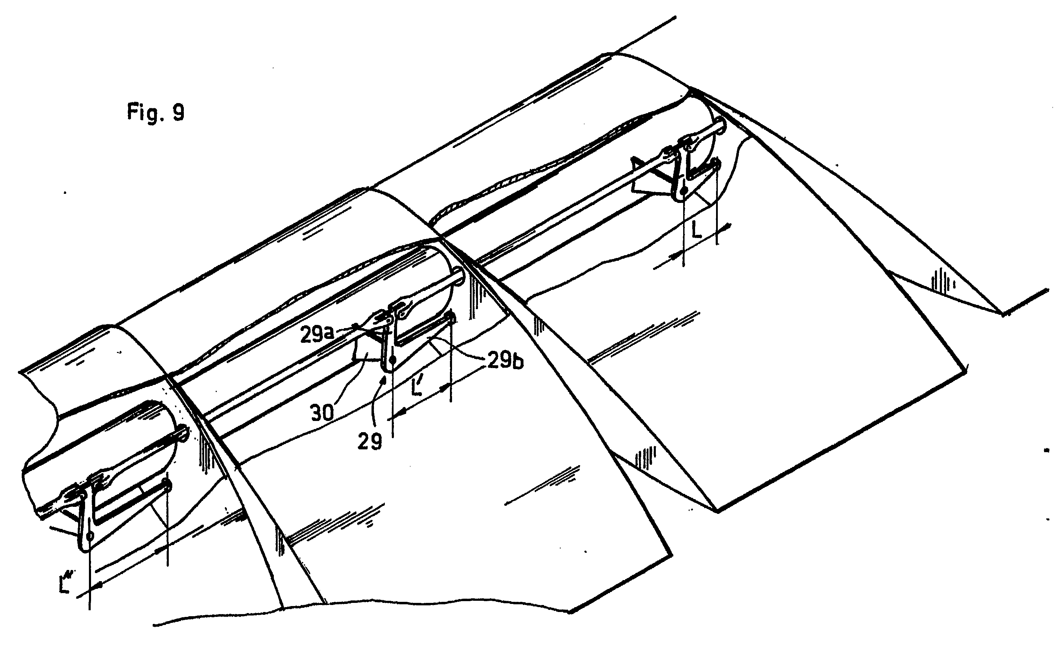

Par ailleurs, les figures 5, 6, 7 et 8 présentent une variante de l'aile précédemment décrite, dans laquelle la variation de l'angle d'incidence de chaque secteur peut être ajustée selon une loi de variation donnée grâce à une came 19 équipant chaque secteur et de profil adapté à cette loi de variation.

Dans cette variante chaque secteur comprend une structure rigide 20 (berceau ou structure triangulée) et une nervure 21 qui sont articulées de façon indépendante autour du longeron 22. Le guignol 23 de chaque secteur est porté par le berceau du secteur précédent et comme précédemment est commandé par des bielles 24 de façon à définir la position angulaire du berceau considéré par l'entremise d'une biellette 25.

Toutefois, la nervure 21 possède dans cette variante un mouvement de pivotement qui est défini, non pas uniquement par le berceau mais également par des moyens de positionnement angulaire complémentaire qui autorisent, lors de la maneouvre des guignols, un ajustement individuel indépendant de l'incidence de chaque nervure.

Ces moyens de positionnement comprennent, pour chaque nervure, la came 19 déjà citée, qui est fixée à l'extrémité de chaque guignol dans le prolongement des bielles de commande 24 de façon à suivre le même mouvement que ces bielles.

Cette came circule entre un galet d'appui 26 solidaire du berceau et un galet commandé 27 solidaire de la nervure. Des moyens élastiques tels que ressort 28 relie le berceau et la nervure en vue de maintenir les galet d'appui et galet commandé en pression contre la came 19.

Ainsi, lorsque les bielles 24 sont actionnées, la came 19 déplace le galet 27 qui engendre une rotation correspondante de la nervure autour du longeron. Il est à noter que le berceau subit par ailleurs un pivotement analogue à celui du mode de réalisation précédent. Ces dispositions permettent donc de cumuler les incidences des secteurs, tout en bénéficiant de la possibilité d'ajuster de façon très souple l'incidence de chaque nervure. (Si les faces de la came 19 étaient parallèles, la nervure subirait un pivotement identique au berceau comme dans le cas précédent).

En outre, dans le mode de réalisation des figures 5 à 8, les berceaux sont en appui latéral les uns contre les autres par un ou des galets tels que 42 qui favorisent la rotation à frottements réduits de deux berceaux contigus l'un par rapport à l'autre autour du longeron. Le cas échéant ces galets peuvent être remplacés par des glissières. Le berceau (ou caisson) du secteur d'extrémité (côté emplanture ou moyeu) vient en appui par galet ou glissière contre le berceau ou caisson fixe déjà évoqué, cependant que le caisson ou berceau du secteur d'extrémité opposé (bout d'aile) est sollicité vers le secteur voisin par des moyens élastiques maintenant l'empilage des secteurs en positions accolées par leurs galets. Ces galets peuvent, le cas échéant, être orientés suivant une diretion angulaire décalée par rapport à la direction transversale de façon à rigidifier le longeron.

De plus, dans le mode de réalisation des figures 5 et 6, l'intrados et l'extrados sont maintenus tout le long du pourtour des nervures par des emboîtements articulés et glissants, qui remplacent les biellettes de liaison 17 des figures 2 et 3.

Par ailleurs, la figure 9 schématise un autre mode de réalisation, dans lequel chaque guignol 29 associé à un secteur est porté par le longeron, ce guignol étant articulé par un axe transversal sur une patte 30 solidaire dudit longeron. Comme précédemment, chacun de ces guignols 29 comprend une première branche 29a liée au dispositif de commande et une seconde branche 29b actionnant le secteur considéré. Les secondes branches des différents guignols ont des longueurs différentes L, L', L''' adaptées au réglage d'incidence souhaité des secteurs. En l'exemple, ces derniers sont composés de caissons et la rotation de ceux-ci est engendrée par les forces appliquées directement sur lesdits caissons par les extrémités des branches 29b qui pénètrent dans des lumières adaptées de leurs nervures latérales.

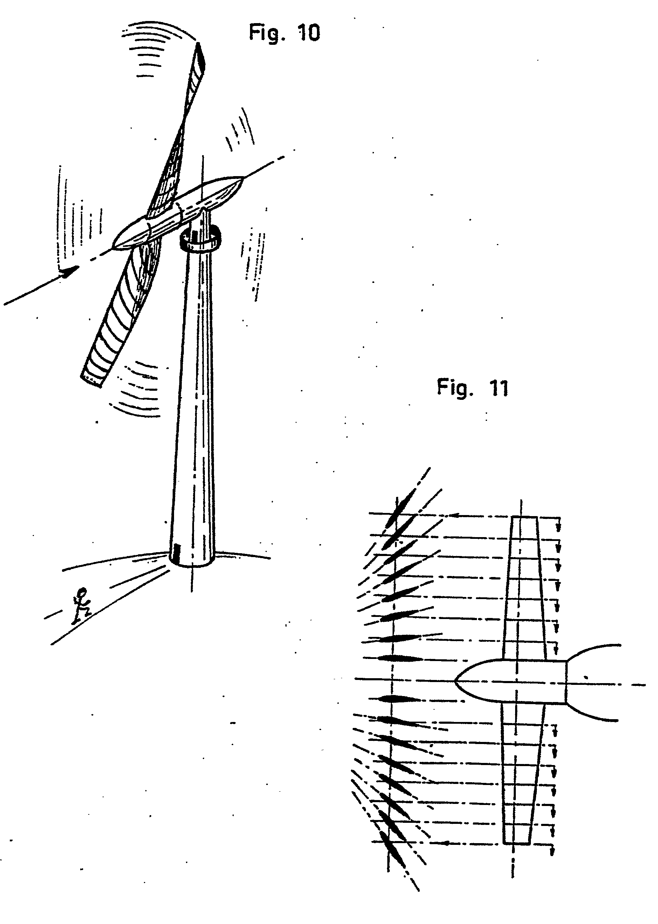

Les figures 10 et 11 illustrent l'application de l'invention à la réalisation d'une éolienne. Comme l'illustre la figure 11, les secteurs ont des incidences progressivement modifiées depuis le moyeu jusqu'au bout des pales, ces incidences étant réglables en fonction de la vitesse du vent pour optimiser le rendement de chaque secteur.

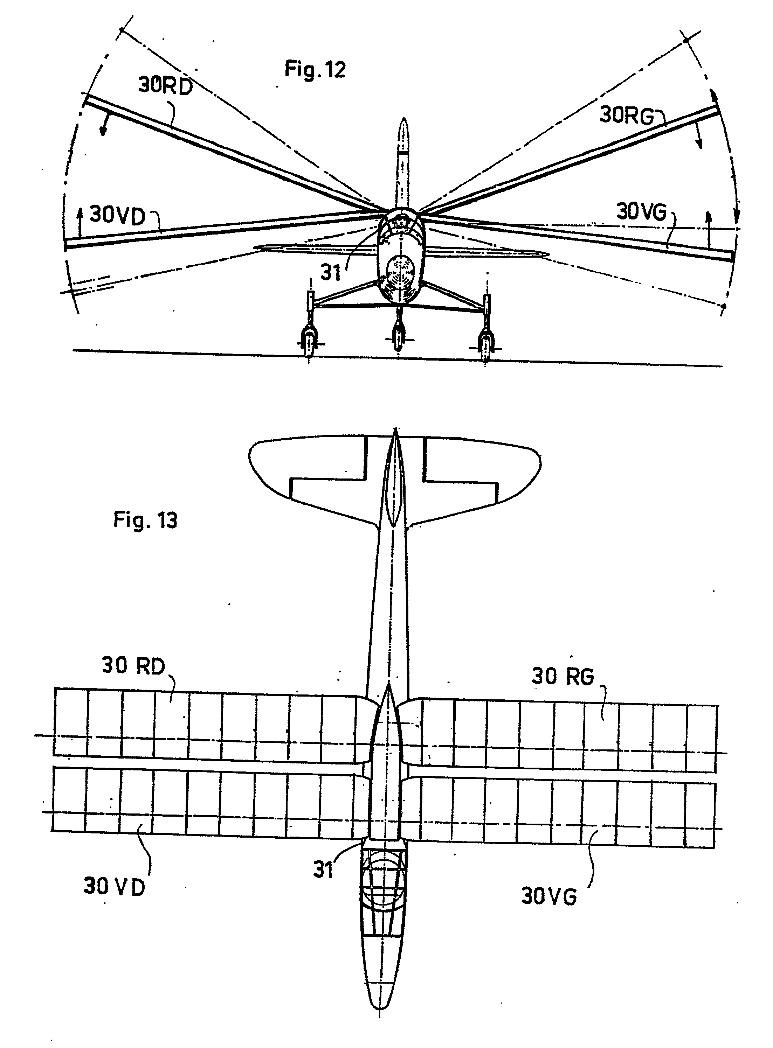

Les figures 12 à 18 ont trait à une autre application de l'invention consistant en la réalisation d'un avion à ailes battantes. Pour assurer un équilibre des masses en mouvement, cet avion comprend quatre ailes profilées du type ci-dessus décrit : deux ailes avant 30 VG et 30 VD situées de part et d'autre du fuselage 31 et deux ailes arrière 30 RG et 30 RD, également situées de part et d'autre du fuselage. Ces ailes et leurs moyens d'entraînement sont agencés de sorte que les deux ailes avant 30 VD et 30 VG montent ou descendent en même temps, et que les deux ailes arrière 30 RD et 30 RG descendent ou montent en même temps, en opposition de phase par rapport aux ailes avant.

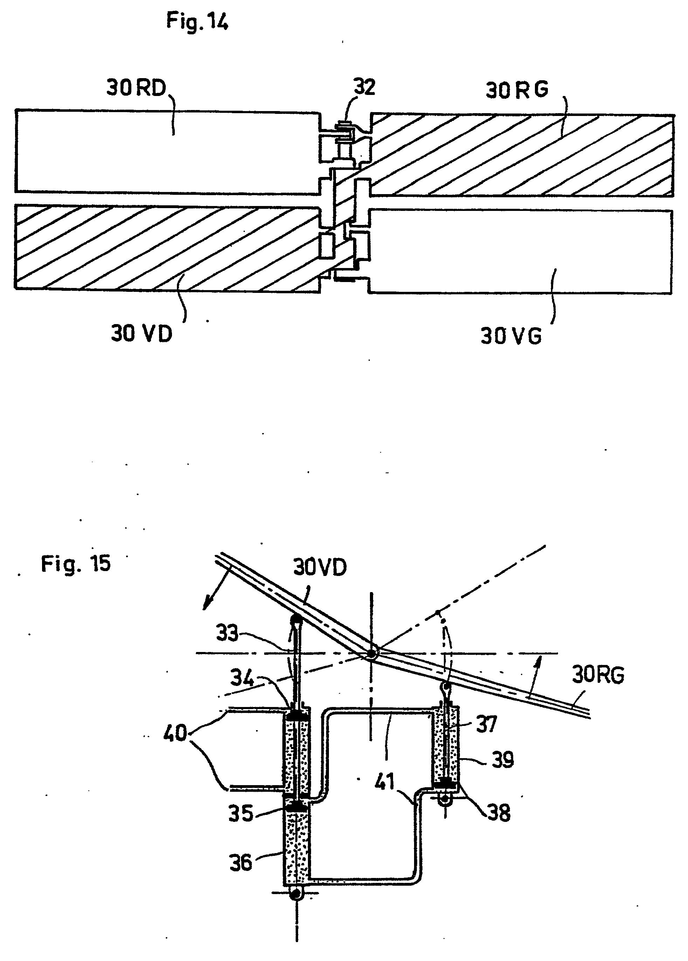

Comme le schématise la figure 14, chaque aile avant 30 VD (ou 30 VG) est liée à l'aile arrière située du côté opposé 30 RG (ou 30 RD) de façon à former avec celle-ci un ensemble articulé autour d'un axe central 32 porté par le fuselage. Les moyens d'entraînement des ailes sont adaptés pour entraîner ces deux ensembles en opposition de phase.

La liaison entre les ailes opposées (30 VD et 30 RG ou 30 VG et 30 RD) peut être une liaison mécanique, ces ailes formant un ensemble rigide comme l'illustre la figure 14 ; cette liaison peut également être une liaison purement hydraulique.

La figure 15 schématise un mode de réalisation d'une telle liaison hydraulique pour l'un des ensembles. Une aile 30 VD est mue par une bielle 33 associée à deux pistons 34 et 35 mobiles dans un cylindre 36 ; l'autre aile 30 RG est mue par une bielle 37 associée à un piston 38 mobile dans un cylindre 39. Le tronçon supérieur du cylindre 36 est relié à un distributeur d'entraînement par des tubulures 40 de passage de fluide comme le montre la figure, cependant que le tronçon inférieur de ce cylindre 36 est couplé avec l'autre cylindre 39 par des tubulures 41.

Les deux ailes 30 VD, et 30 RG se trouvent ainsi liées hydrauliquement et entraînées en synchronisme par les refoulements et aspirations cycliques du distributeur, dans un mouvement cyclique de battement. L'autre paire d'aile peut être entraînée par le même distributeur grâce à un montage en opposition.

Au cours de ces battements, les secteurs des différentes ailes sont actionnées de façon répétitive par leur dispositif de commande au cours de cycles de fonctionnement correspondant aux cycles de battement. Au cours de ces cycles, l'incidence de ces secteurs varie ainsi de façon cyclique afin de leur conférer un rendement optimal en fonction du secteur considéré (emplacement le long du profil) et de la position de l'aile dans le cycle de battement.

A cet effet, le dispositif de commande des guignols est associé à des moyens d'actionnement cycliques situés à l'emplanture de l'aile considérée.

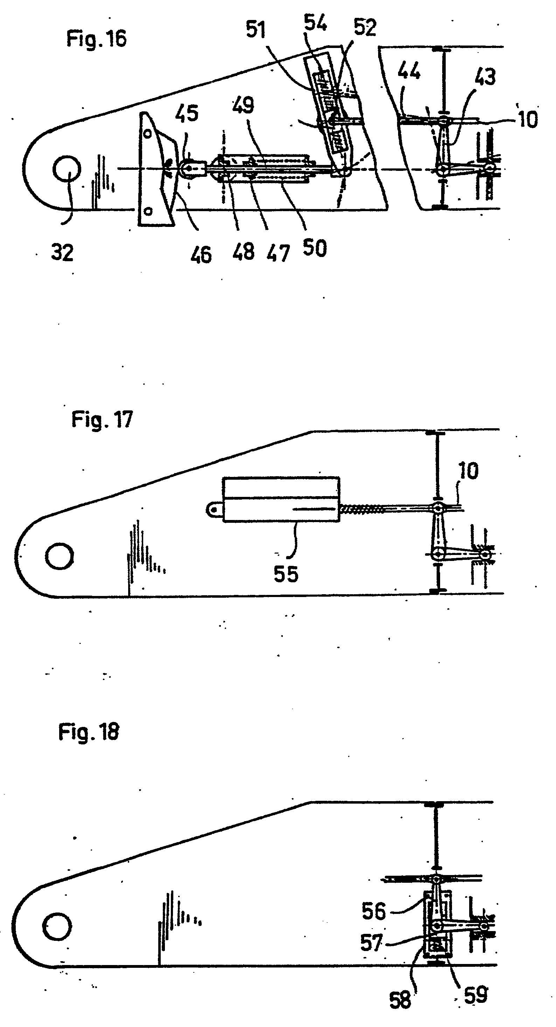

La figure 16 représente un premier mode de réalisation de ces moyens d'actionnement. On retrouve à cette figure le premier guignol (guignol d'emplanture) référencé 43 et la première bielle 44 du dispositif de commande des guignols. Cette bielle est actionnée par un organe d'appui en l'exemple un galet 45 qui est maintenu en pression contre une câme 46 fixe par rapport à l'aile et assujetti sur le fuselage (l'axe de rotation de l'aile a été symbolisé en 32). Un système du réglage d'amplitude est interposé entre l'organe d'appui 45 et la bielle 44 en vue d'autoriser une modification extérieure du pas au cours des cycles de fonctionnement.

En l'exemple représenté, le galet 45 est porté par une bielle tubulaire 47 articulée autour d'un axe transversal 48 porté par le caisson d'emplanture de l'aile ; cette bielle contient une barre 49 à l'extrémité de laquelle est assujetti le galet 45, un ressort 50 tendant à appliquer celui-ci contre la came 46.

La barre de la bielle est attelée par un axe transversal sur une glissière 51 (de direction frontale) laquelle est articulée par un axe transversal 52 sur le caisson d'emplanture. Un coulisseau 53 peut être déplacé le long de la glissière grâce à une vis sans fin 54 qui peut être amenée à tourner par un moteur (non représenté) commandé depuis le poste de pilotage. Sur ce coulisseau 53 est articulée la première bielle 44 de commande des guignols. La came 46 permet de faire varier cycliquement les incidences des secteurs en fonction de la position de l'aile dans le cycle de battement, cependant que le réglage de la position du coulisseau 53 sert à ajuster l'amplitude des variations (l'amplitude de ces variations peut être ajustée à une valeur nulle - neutralisation de l'influence de la came - en positionnant le coulisseau au point d'articulation 52 de la glissière).

Le profil de la came 46 est prévu de façon à engendrer des inversions d'incidence appropriées lors des changements de sens des battements. Ces inversions pourront être optimisées en fonction des efforts d'inertie pour être, à la fois, rapides afin d'obtenir de bons rendements de portance et/ou de propulsion, et progressifs pour être compatibles avec la résistance mécanique des structures.

La figure 17 présente une variante dans laquelle les moyens d'actionnement du dispositif de commande à bielles sont constitués par un robot programmé 55, apte à actionner de façon cyclique la première bielle du dispositif de commande. Ce robot permet également de réaliser les changements de pas grâce à un programme paramétré par des données externes.

Par ailleurs, la figure 18 présente une variante comprenant des moyens pour changer globalement l'incidence générale de l'aile notamment au cours des phases de décollage ou d'atterrissage.

Dans cette variante, le premier guignol (référencé 56 à cette figure) qui est situé vers l'emplanture et porté par le caisson fixe d'emplanture, est articulé sur un coulisseau transversal 57, lequel est associé à des moyens de manoeuvre permettant d'en faire varier la position. En l'exemple, ce coulisseau mobile dans le sens frontal est logé dans une glissière 58 assujettie sur le caisson d'emplanture et contenant une vis sans fin 59 qui peut être amenée à tourner au moyen d'un moteur (non représenté) commandé depuis le poste de pilotage.

## Revendications

1. Aile profilée destinée à servir de voilure ou de pale, comprenant un longeron axial (3), une pluralité de secteurs d'aile (1, 2) juxtaposés le long de l'aile et habillés en surface d'un revêtement déformable (11, 12), chacun des secteurs d'aile étant articulé sur le longeron pour pouvoir pivoter autour de celui-ci, et des moyens de positionnement angulaire desdits secteurs autour du longeron, caractérisée en ce que les moyens de positionnement angulaire des secteurs comprennent, d'une part, une série de guignols (7, 23, 29) chacun associé à un secteur de façon à fixer la position angulaire dudit secteur autour du longeron (3), d'autre part, un dispositif de commande desdits guignols (10) apte à engendrer leur pivotement en vue de conférer à chacun de ceux-ci une position déterminée en fonction des incidences souhaitées pour chaque secteur d'aile (1, 2), chaque guignol (7, 23) associé à un secteur d'aile donné étant porté par le secteur précédent et articulé sur celui-ci par un axe transversal, ledit guignol comprenant une première branche (7a) liée au dispositif de commande (10) en vue de commander la rotation dudit guignol par rapport au secteur précédent, et une seconde branche (7b) articulée sur le secteur d'aile considéré pour conférer audit secteur une position angulaire déterminée autour du longeron (3), en vue d'assigner aux différents secteurs d'aile (1, 2) des incidences variables par modifications progressives.

2. Aile profilée selon la revendication 1, caractérisée en ce que chaque secteur d'aile (1, 2) comprend au moins une nervure transversale (6, 21) et une structure rigide (5, 20) telle que caisson, berceau, structure triangulée, articulées autour du longeron (3), des bielles de commande (10, 24) étant articulées autour d'axes transversaux sur les premières branches (7a) des guignols en vue de les relier deux à deux, cependant que la seconde branche (7b) de chaque guignol est articulée, par l'entremise d'une biellette (9) et d'axes transversaux, sur la structure rigide (5, 20) du secteur d'aile correspondant.

3. Aile profilée selon la revendication 2, caractérisée en ce que chaque nervure (6) est solidaire de la structure rigide (5) du secteur correspondant, chaque guignol (7) associé à un secteur donné étant porté par la nervure (6) ou la structure (5) du secteur précédent.

4. Aile profilée selon la revendication 2, caractérisée en ce que la structure (20) et la nervure (21) de chaque secteur sont articulées de façon indépendante autour du longeron, chaque guignol (23) associé à un secteur donné étant porté par la structure rigide (20) du secteur précédent et étant pourvu de moyens (19, 26, 27, 28) de positionnement angulaire de la nervure (21) du secteur considéré en vue d'autoriser individuellement un ajustement d'incidence de chaque nervure.

5. Aile profilée selon la revendication 4, caractérisée en ce que les moyens de positionnement angulaire associés à chaque guignol (23) comprennent une came (19) solidaire du guignol considéré et ayant un profil adapté à l'ajustement d'incidence à réaliser, un galet d'appui (26) solidaire de la nervure (21) et des moyens élastiques (28) reliant la structure rigide et la nervure en vue de maintenir le galet d'appui (26) et galet commandé (27) en pression contre la came (19).

6. Aile profilée selon l'une des revendications 1, 2, 3, 4 ou 5, caractérisée en ce que chaque secteur d'aile comprend un caisson ou berceau (20) en appui latéral contre la caisson ou berceau du secteur voisin par au moins un galet (42) ou glissière, permettant la rotation desdits secteurs l'un par rapport à l'autre autour du longeron, le caisson ou berceau d'un des deux secteurs d'extrémité venant en appui par galet ou glissière contre un caisson ou verceau fixe, cependant que le caisson ou berceau du secteur d'extrémité opposé est sollicité vers le secteur voisin par des moyens élastiques maintenant l'empilage de secteurs en positions accolées.

7. Aile profilée selon la revendication 2, caractérisée en ce que le revêtement déformable comprend, au niveau de chaque secteur, un profil d'extrados (11) et un profil d'intrados (12), aptes à subir un vrillage et agencés contre deux nervures voisines (6) de façon à pouvoir glisser indépendamment l'un de l'autre lorsque ces nervures prennent des incidences différentes.

8. Aile profilée selon la revendication 7, caractérisée en ce que chaque profil d'extrados (11) ou d'intrados (12) comprend une nappe d'habillage (13) portée par des raidisseurs, dont deux latéraux (14) chevauchant les nervures (6) et deux (15) situés le long des bord d'attaque et bord de fuite formant des plages de glissement, le profil d'extrados et le profil d'intrados étant reliés par des organes de liaison (17) aptes à les maintenir appliqués contre les nervures (6) tout en autorisant leur glissement relatif.

9. Aile profilée selon l'une des revendications précédentes, destiné à présenter un fonctionnement cyclique, caractérisée en ce que le dispositif de commande des guignols est associé à des moyens d'actionnement cyclique (44–50), situés à l'emplanture de l'aile et adaptés pour actionner de façon répétitive le dispositif de commande au cours des cycles de fonctionnement.

10. Aile profilée selon la revendication 9, caractérisée en ce que:
   — le dispositif de commande comprend des bielles (10) reliant les guignols deux à deux,

– les moyens d'actionnement comprennent une came (46) agencée de façon à être parcourue par un organe d'appui (45) au cours d'un cycle de fonctionnement, ledit organe d'appui étant porté par l'aile au voisinage de l'emplanture et agencé pour demeurer en pression contre la came et actionner une première bielle (44) du dispositif de commande, s'articulant sur le premier guignol (43).

11. Aile profilée selon la revendication 10, caractérisée en ce qu'un système de réglage d'amplitude (51–54) est interposé entre l'organe d'appui (45) et la bielle (44) qu'il actionne, en vue d'autoriser une modification extérieure de pas au cours des cycles de fonctionnement.

12. Aile profilée selon la revendication 9, caractérisée en ce que:

– le dispositif de commande comprend des bielles (10) reliant les guignols deux à deux,

– les moyens d'actionnement comprennent un robot programmé (55) apte à actionner de façon cyclique une première bielle du dispositif de commande, s'articulant sur le premier guignol.

13. Aile profilée selon l'une des revendications précédentes, caractérisée en ce que le premier guignol (56) situé vers l'emplanture est porté par un caisson fixe d'emplanture et est articulé sur un coulisseau (56) mobile selon une direction frontale et associé à des moyens de manœuvre (57, 59) permettant d'en faire varier la position en vue de changer globalement l'incidence générale de l'aile.

14. Application de l'aile profilée conforme à l'une des revendications précédentes, en vue de constituer une hélice aérienne ou marine, une pale d'éolienne, une pale d'aéronef tel qu'hélicoptère ou une voilure d'aéronef.

15. Aéronef à ailes battantes, comprenant un fuselage (31) et, de part et d'autre, au moins deux ailes profilées conformes à la revendication 12, lesdites ailes (30) étant articulées sur le fuselage et associées à des moyens d'entraînement (33–41) dans un mouvement cyclique de battement, les moyens d'actionnement cyclique de chaque aile étant adaptés pour conférer à leurs secteurs une incidence variant de façon cyclique fonction de la position de l'aile dans le cycle de battement.

16. Aéronef à ailes battantes selon la revendication 15, caractérisé en ce qu'il comprend quatre ailes profilées, deux ailes avant (30 VD, 30 VG) situées de part et d'autre du fuselage, et deux ailes arrière (30 RD, 30 RG) situées de part et d'autre dudit fuselage, lesdites ailes et leurs moyens d'entraînement étant agencés de sorte que les deux ailes avant (30 VD, 30 VG) montent ou descendent en même temps, et que les deux ailes arrière (30 RD, 30 RG) descendent ou montent en même temps, en opposition de phase par rapport aux ailes avant.

17. Aéronef à ailes battantes selon la revendication 16, caractérisé en ce que chaque aile avant (30 VD, 30 VG) est liée à l'aile arrière (30 RG, 30 RD) située du côté opposé de façon à former avec celle-ci un ensemble articulé autour d'un axe central (32) porté par le fuselage (31), les moyens d'entraînement (33–41) étant adaptés pour entraîner les deux ensembles en opposition de phase.

**Patentansprüche**

1. Profilierter Flügel zum Gebrauch als Tragflügel oder Flügelblatt, mit einem Längsholm (3), mehreren Flügelabschnitten (1, 2), die entlang des Flügels nebeneinander angeordnet und an der Oberfläche mit einer verformbaren Verkleidung (11, 12) ausgestattet sind, wobei jeder der Flügelabschnitte gelenkig an dem Holm angebracht ist, so daß er sich um diesen herum drehen kann, sowie mit Mitteln zur Einstellung der Winkellage der besagten Abschnitte im Verhältnis zu dem Holm, dadurch gekennzeichnet, daß die Mittel zur Einstellung der Abschnittwinkellage einerseits eine Reihe von Hebeln (7, 23, 29) umfassen, von denen jeder mit einem Abschnitt so verbunden ist, daß er die Winkellage des besagten Abschnitts im Verhältnis zu dem Holm (3) fixiert, und andererseits einer Vorrichtung (10) zum Steuern der besagten Hebel, die so beschaffen ist, daß sie deren Drehung bewirkt, um jedem von ihnen eine von den gewünschten Anstellwinkeln jedes Flügelabschnitts (1, 2) abhängige Lage zu vermitteln, wobei jeder mit einem bestimmten Flügelabschnitt verbundene Hebel (7, 23) durch den vorhergehenden Abschnitt abgestützt und mit diesem durch eine Querspindel gelenkig verbunden ist, und zwar umfaßt der besagte Hebel einen ersten Schenkel (7a), der mit der Steuervorrichtung (10) in Verbindung steht, um die Drehung des besagten Hebels im Verhältnis zu dem vorhergehenden Abschnitt zu steuern, sowie einen zweiten Schenkel (7b), der mit dem betreffenden Flügelabschnitt gelenkig verbunden ist, um dem besagten Abschnitt eine gewisse Winkellage im Verhältnis zu dem Holm (3) zu vermitteln, so daß den verschiedenen Flügelabschnitten (1, 2) durch schrittweise Änderungen veränderliche Anstellwinkel vermittelt werden.

2. Profilierter Flügel nach Anspruch 1, dadurch gekennzeichnet, daß jeder Flügelabschnitt (1, 2) mindestens eine Querrippe (6, 21) und eine starre Struktur (5, 20), z.B. eine Kasten-, Wiegen- oder Dreieckstruktur umfaßt, die mit Holm (3) in gelenkiger Verbindung stehen, sowie Steuerstangen (10, 24), die um Querspindeln in den erstgenannten Schenkeln (7a) der Hebel gelenkig angeordnet sind, um sie paarweise zu verbinden, während der zweite Schenkel (7b) jedes Hebels durch Zwischenschaltung eines Glieds (9) und von Querspindeln mit der starren Struktur (5, 20) des betreffenden Flügelabschnitts in gelenkiger Verbindung steht.

3. Profilierter Flügel nach Anspruch 2, dadurch gekennzeichnet, daß jede Rippe (6) fest mit der starren Struktur (5) des betreffenden Abschnitts verbunden ist, wobei jeder mit einem bestimmten Abschnitt verbundene Hebel (7) durch Rippe (6) oder Struktur (5) des vorhergehenden Abschnitts abgestützt ist.

4. Profilierter Flügel nach Anspruch 2, dadurch gekennzeichnet, daß Struktur (20) und Rippe (21) jedes Abschnitts auf unabhängige Weise mit dem Holm gelenkig verbunden sind, wobei jeder mit einem bestimmten Abschnitt in Verbindung stehende Hebel (23) durch die starre Struktur (20) des vorhergehenden Abschnitts abgestützt wird und mit Mitteln (19, 26, 27, 28) zur Einstellung der Winkellage von Rippe (21) des betreffenden Abschnitts versehen ist, um individuelle Einstellung des Anstellwinkels jeder Rippe zu ermöglichen.

5. Profilierter Flügel nach Anspruch 4, dadurch gekennzeichnet, daß die mit jedem Hebel (23) in Verbindung stehenden Mittel zur Einstellung der Winkellage ein mit dem betreffenden Hebel fest verbundenes Kurvenstück (19) umfassen, dessen Profil so beschaffen ist, daß es Einstellung des gewünschten Anstellwinkels ermöglicht, sowie eine mit der starren Struktur (20) fest verbundene Stützrolle (26), eine mit der Rippe (21) fest verbundene gesteuerte Rolle (27) und elastische Mittel (28), die die starre Struktur und die Rippe zu verbinden, daß die Stützrolle (26) und die gesteuerte Rolle (27) am Kurvenstück (19) angepreßt werden.

6. Profilierter Flügel nach einem der Ansprüche 1, 2, 3, 4 oder 5, dadurch gekennzeichnet, daß jeder Flügelabschnitt eine Kasten- oder Wiegenstruktur (20) umfaßt, die sich seitlich an der Kasten- oder Wiegenstruktur des benachbarten Abschnitts abstützt, und zwar über eine Rolle (42) oder eine Gleitführung, die die Drehung der besagten Abschnitte im Verhältnis zueinander rings um den Holm gestattet, wobei die Kasten- oder Wiegenstruktur eines der beiden Endabschnitte sich über eine Rolle oder Gleitführung an einer festen Kasten- oder Wiegenstruktur abstützt, während die Kasten- oder Wiegenstruktur des gegenüberliegenden Endabschnitts durch elastische Mittel, die den Stapel von Abschnitten in aneinander anschließenden Lagen erhalten, an dem benachbarten Abschnitt angepreßt wird.

7. Profilierter Flügel nach Anspruch 2, dadurch gekennzeichnet, daß die verformbare Verkleidung im Bereich jedes Abschnitts ein Oberprofil (11) und ein Unterprofil (12) umfaßt, die so beschaffen sind, daß sie verwunden werden können, und die so an die beiden benachbarten Rippen (6) anschließen, daß sie unabhängig voneinander gleiten können, wenn die besagten Rippen andere Anstellwinkel einnehmen.

8. Profilierter Flügel nach Anspruch 7, dadurch gekennzeichnet, daß jedes Oberprofil (11) oder Unterprofil (12) eine auf Versteifungselementen ruhende Auskleidungslage (13) umfaßt, wobei die beiden seitlichen Versteifungselemente (14) die Rippen (6) überlappen und die beiden Versteifungselemente (15) entlang der Vorderkante und der Hinterkante Gleitflächen bilden, während das Oberprofil und das Unterprofil durch Verbindungselemente (17) verbunden sind, die so beschaffen sind, daß sie sie in an den Rippen (6) angepreßtem Zustand erhalten, aber trotzdem Gleitbewegungen im Verhältnis zueinander gestatten.

9. Profilierter Flügel nach einem der vorstehenden Ansprüche, mit zyklischer Wirkungsweise, dadurch gekennzeichnet, daß die Hebelsteuervorrichtung mit Mitteln für zyklische Betätigung (44–50) verbunden ist, die am Sockel des Flügels angeordnet und so beschaffen sind, daß sie im Laufe der Betriebszyklen die Steuervorrichtung auf sich wiederholende Weise betätigen.

10. Profilierter Flügel nach Anspruch 9, dadurch gekennzeichnet, daß

– die Steuervorrichtung Stangen (10) für paarweise Verbindung der Hebel umfaßt,
– die Betätigungsmittel ein Kurvenstück (46) umfassen, das so beschaffen ist, daß im Laufe eines Betriebszyklus ein Stützelement (45) darüberläuft, wobei das besagte Stützelement von dem Flügel im Bereich des Sockels abgestützt und so angeordnet ist, daß es in an das Kurvenstück angepreßten Zustand verbleibt und eine erste Stange (44) der Steuervorrichtung betätigt, die mit dem ersten Hebel (43) in gelenkiger Verbindung steht.

11. Profilierter Flügel nach Anspruch 10, dadurch gekennzeichnet, daß zwischen Stützelement (45) und der betätigenden Stange (44) ein Amplitudenregelsystem (51–54) angeordnet ist, um externe Regelung der Neigung im Laufe der Betriebszyklen zu ermöglichen.

12. Profilierter Flügel nach Anspruch 9, dadurch gekennzeichnet, daß

– die Steuervorrichtung die Hebel paarweise verbindende Stangen (10) umfaßt,
– die Betätigungsmittel einen programmierten Roboter (55) umfassen, der so beschaffen ist, daß er auf zyklische Weise eine erste Stange der Steuervorrichtung betätigt, die mit dem ersten Hebel in gelenkiger Verbindung steht.

13. Profilierter Flügel nach einem der vorstehenden Ansprüche, dadurch gekennzeichnet, daß der auf den Sockel zu angeordnete erste Hebel (56) durch eine feste Sockelkastenstruktur abgestützt und mit einem beweglichen Gleitblock (56) in Frontalrichtung gelenkig verbunden ist und mit Steuermitteln (57, 59) in Verbindung steht, die es ermöglichen seine Lage zu ändern, um den allgemeinen Anstellwinkel des Flügels in seiner Gesamtheit zu ändern.

14. Anwendung des profilierten Flügels nach einem der vorstehenden Ansprüche im Hinblick auf die Erstellung eines Flugzeug- oder Schiffspropellers, eines Windmaschinenflügels, eines Flügels für eine Flugmaschine wie einen Hubschrauber oder eines Flugmaschinentragflügels.

15. Schlagflügelflugzeug mit einem Rumpf (31) und zu beiden Seiten mindestens zwei profilierten Flügeln im Einklang mit Anspruch 12, wobei die besagten Flügel (30) mit dem Rumpf in gelenkiger Verbindung stehen und mit Antriebsmitteln (33–41) in zyklischer Schlagbewegung verbunden sind, wobei die Mittel zu zyklischer Betätigung jedes Flügels so beschaffen sind, daß sie ihren Abschnitten einen Anstellwinkel vermitteln, der sich in zyklischer Weise je nach der Lage des Flügels innerhalb des Schlagzyklus ändert.

16. Schlagflügelflugzeug nach Anspruch 15, dadurch gekennzeichnet, daß es vier profilierte Flügel umfaßt, und zwar zwei Vorderflügel (30 VD, 30 VG) zu beiden Seiten des Rumpfes und zwei Hinterflügel (30 RD, 30 RG) zu beiden Seiten des Rumpfes, wobei die besagten Flügel und ihre Antriebsmittel so beschaffen sind, daß die beiden Vorderflügel (30 VD, 30 VG) sich gleichzeitig heben oder senken und daß die beiden Hinterflügel (30 RD, 30 RG) sich gleichzeitig senken oder heben, und zwar in entgegengesetzter Phase zu den Vorderflügeln.

17. Schlagflügelflugzeug nach Anspruch 16, dadurch gekennzeichnet, daß jeder Vorderflügel (30 VD, 30 VG) mit dem Hinterflügel (30 RG, 30 RD) an der gegenüberliegenden Seite so verbunden ist, daß er mit diesem eine durch den Rumpf (31) abgestützte rings um eine Mittelspindel (32) gelenkige Baugruppe bildet, wobei die Antriebsmittel (33–41) so beschaffen sind, daß sie die beiden Baugruppen in entgegengesetzter Phase antreiben.

**Claims**

1. Profiled wing intended for use as an aerofoil or blade, comprising an axial spar (3), several wing sections (1, 2) located next to one another along the wing and clad on the surface with a deformable lining (11, 12), each of these wing sections being articulated on the spar so as to be capable of pivoting about the latter, and means for angular positioning of said sections about the spar, characterised in that the means of angular positioning of the sections comprise, on the one hand, a number of levers (7, 23, 29), each of them associated with a section so as to fix the angular position of said section about spar (3), and, on the other hand, a device (10) for controlling said levers, capable of bringing about their pivoting motion with a view to conferring to each of them a position depending on the angles of incidence required in respect of each wing section (1, 2), each lever (7, 23) associated with a given wing section being supported by the preceding section and articulated on the latter by means of a transverse spindle, said lever comprising a first leg (7a) linked to controlling device (10) with a view to controlling the rotation of said lever in relation to the preceding section, and a second leg (7b) articulated on the respective wing section so as to confer to said section a certain angular position about spar (3), with a view to imparting, by progressive modification, variable angles of incidence to the different wing sections (1, 2).

2. Profiled wing according to claim 1, characterised in that each wing section (1, 2) comprises at least one transverse rib (6, 21) and one rigid structure (5, 20) such as a box, cradle or triangular structure articulated about spar (3), control rods (10, 24) articulated about transverse spindles in the first legs (7a) of the levers with a view to connecting them two by two, whereas the second leg (7b) of each lever is articulated, via a link (9) and transverse spindles on the second structure (5, 20) of the corresponding wing section.

3. Profiled wing according to claim 2, characterised in that each rib (6) is firmly connected with rigid structure (5) of the corresponding section, each lever (7) associated with a given section being supported by rib (6) or structure (5) of the preceding section.

4. Profiled wing according to claim 2, characterised in that structure (20) and rib (21) of each section are articulated in independent manner about the spar, each lever (23) associated with a given section being supported by rigid structure (20) of the preceding section and provided with means (19, 26, 27, 28) for angular positioning of rib (21) of the respective section with a view to enabling individual adjustment of the angle of incidence of each rib.

5. Profiled wing according to claim 4, characterised in that the means for angular positioning associated with each lever (23) comprise a cam (19) firmly connected with the respective lever and with the profile designed in accordance with the adjustment of the angle of incidence to be brought about, a support roller (26) firmly connected with rigid structure (20), a controlled roller (27) firmly connected with rib (21) and elastic means (28) linking the rigid structure and the rib with a view to keeping support roller (26) and controlled roller (27) pressed against cam (19).

6. Profiled wing according to one of claims 1, 2, 3, 4 or 5, characterised in that each wing section comprises a box or cradle structure (20) laterally abutting the box or cradle structure of the neighbouring section by means of a roller (42) or a slide enabling the rotation, in relation to one another, of said sections about the spar, with the box or cradle structure of one of the two end sections abuting, via a roller or slide, a fixed box or cradle structure, whereas the box or cradle structure of the opposite end section is brought to bear on the neighbouring section by elastic means which maintain the stack of sections in conjoined positions.

7. Profiled wing according to claim 2, characterised in that the deformable lining comprises, at the level of each section, an upper-surface profile (11) and an under-surface profile (12), capable of undergoing torsion and arranged in contact with two adjacent ribs (6) so as to be capable of sliding independently from one another when said ribs assume different angles of incidence.

8. Profiled wing according to claim 7, characterised in that each upper-surface profile (11) or under-surface profile (12) comprises a cladding layer (13) supported by stiffeners, of which two lateral stiffeners (14) span ribs (6) and two stiffeners (15) situated along the leading edge and the trailing edge form slide faces, whereby the upper-surface profile and the under-surface profile are connected by linking elements (17) so designed as to keep in contact with ribs (6) while enabling their relative sliding motion.

9. Profiled wing according to one of the preceding claims, intended for cyclic operation, characterised in that the device controlling the levers is associated with means (44–50) for cyclic operation located at the socket of the wing and so designed as to actuate, in repetitive manner, the control device in the course of the operational cycles.

10. Profiled wing according to claim 9, characterised in that:
  – the control device comprises rods (10) connecting the levers two by two,
  – the actuating means comprise a cam (46) so designed as to be passed over by a support device (45) in the course of an operational cycle, said support device being carried by the wing in the vicinity of the socket and arranged so as to remain pressed against the cam, and to actuate first rod (44) of the control device, articulated on the first lever (43).

11. Profiled wing according to claim 10, characterised in that an amplitude-regulating system (51–54) is interposed between support device (45) and rod (44) which it activates, so as to enable external modification of the pitch in the course of the operational cycles.

12. Profiled wing according to claim 9, characterised in that:
- the control device comprises rods (10) linking the levers two by two;
- the actuating means comprise a programmed robot (55) so designed as to actuate in cyclic manner a first rod of the control device, articulated on the first lever.

13. Profiled wing according to one of the preceding claims, characterised in that first lever (56) located nearest to the socket is supported by a fixed socket box structure and articulated in respect of a mobile slide block (56) in a frontal direction and associated with actuating means (57, 59) which enable its position to be modified with a view to changing the general angle of incidence of the wing in its entirety.

14. Application of the profiled wing according to one of the preceding claims, with a view to constituting an aerial or marine propeller, the blade of a wind machine, the blade of an aircraft such as a helicopter or an aerofoil of an aircraft.

15. Flapping-wing aircraft comprising a fuselage (31) and on each of the two slides at least two profiled wings according to claim 12, said wings (30) being articulated on the fuselage and associated with means for driving (33–41) in a cyclic flapping movement, whereby the means for cyclic actuation of each wing are so designed as to confer to their sections an angle of incidence varying in cyclic manner according to the position of the wing in the flapping cycle.

16. Flapping-wing aircraft according to claim 15, characterised in that it comprises four profiled wings, two front wings (30 VD, 30 VG) located on both sides of the fuselage, and two rear wings (30 RD, 30 RG) located on both sides of said fuselage, said wings and their driving means being so designed as to ensure that the two front wings (30 VD, 30 VG) rise or descend at the same time, and that the two rear wings (30 RD, 30 RG) descend or rise at the same time, in opposite phase relative to the front wings.

17. Flapping-wing aircraft according to claim 16, characterised in that each front wing (30 VD, 30 VG) is linked with the rear wing (30 RG, 30 RD) located on the opposite side so as to form with the latter an assembly articulated in respect of a central spindle (32) and supported by fuselage (31), the driving means (33–41) being so designed as to drive the two assemblies in opposite phase.

Fig. 1

EP 0 274 777 B1

Fig. 2

Fig. 3

Fig. 4

Fig. 5

Fig. 6

Fig. 7

20

22          21

23          24

Fig. 8

42                    5

26

23          24

Fig. 9

Fig. 10

Fig. 11

Fig. 12

30RD

30RG

30VD

30VG

31

Fig. 13

30 RD

30 RG

30 V D

30VG

31

Fig.14

30 RD    32    30 R G

30 VD    30 VG

Fig. 15    30VD

33
34
40
35
36

41

30RG

37
39
38

EP 0 274 777 B1

Fig.16

51  54  52

45  49

44  43

10

32  46  48  47  50

Fig.17

10

55

Fig.18

56

57

58  59